# EUROPEAN PATENT APPLICATION

(11) **EP 2 692 400 A1**
(43) Date of publication of application: **05.02.2014**
(21) Application number: 12764809.5
(22) Date of filing: 21.03.2012
(51) Int. Cl.: A63F 13/12

(54) **GAME SYSTEM, AND CONTROL METHOD AND COMPUTER PROGRAM EMPLOYED THEREUPON**

(30) Priority: 31.03.2011 JP 2011080861
(71) Applicant: Konami Digital Entertainment Co., Ltd., Tokyo 107-8324 (JP)
(72) Inventor: YAMAMOTO, Kenichi, Tokyo 107-8324 (JP)
(74) Representative: Haley, Stephen
(86) International application number: PCT/JP2012/057197
(87) International publication number: WO 2012/133051

(57) **Abstract**

A game system (1) comprises a center server (3), and a plurality of game terminals (GT) which are capable of connecting to the center server (3) via a network (5). The game system provides ranking information using game results of each of the game terminals (GT) . A GPS function is disposed on each of the plurality of game terminals (GT), said function transmitting the present terminal's location information to the center server (3) . On the center server (3), select game results are extracted from the game results of the plurality of game terminals (GT) on the basis of the location information of each of the game terminals (GT), and a prescribed process is executed which is limited to the extracted select game results such that a ranking which is limited to the extracted select game results is provided.

## Description

### Technical Field

The present invention relates to a game system in which reference information using a game result is provided, a control method used therein, and a computer program.

### Background Art

There exist game machines or game systems in which reference information using a game result is provided. There has been known game systems in which ranking information such as national ranking, prefectural ranking, ranking within a store, ranking within a game machine, ranking within a group is provided based on a game result as the reference information (for example, see Patent Literature 1).

### Patent Literature

Patent Literature 1: JP 2005-168762 A

### Summary of Invention

### Technical Problem

In a game system of a related art disclosed in Patent Literature 1, a target range used to decide ranking is set in advance, and the target range does not change. For this reason, for example, when the target range is set according to a prefecture, since there is a disparity of population density according to on a set range, for example, since the population of players in Tokyo is large and the population of players in provinces is small, there occurs an imbalance in ranking between ranges. However, in the game system of the related art, this problem is hardly resolved.

In this regard, an object of the present invention is to provide a game system capable of changing content of the reference information using the position of a game terminal, a control method used therein, and a computer program.

### Solution to Problem

A game system according to the present invention is a game system which comprises: a center server; and a plurality of game terminals connectable to the center server via a communication line, wherein reference information is provided based on a processing result using game results of the game terminals, each of the plurality of game terminals comprises a positional information transmitting device adapted and configured to transmit own positional information to the center server, and the center server comprises: an extracting device adapted and configured to extract a part of the game results of the plurality of game terminals based on the positional information transmitted by the positional information transmitting device; and a processing executing device adapted and configured to execute predetermined processing confined to a part of the game results extracted by the extracting device such that the reference information confined to the part of the game results is provided.

According to the present invention, a part of all game results are extracted using the place in which each game terminal is actually positioned, and the processing result confined to the extraction range is provided. Thus, since the actual position of the game result can be reflected in the reference information, content of the reference information can be changed using the position of the game terminal. Further, by changing the content of the reference information using the position of the game terminal, a geographical problem such as an imbalance caused by a disparity of population density can be resolved.

When the positional information is used, a part of game results serving as the target of the reference information may be extracted in various ways. For example, in an aspect of the game system according to the present invention, the extracting device may specify a position of at least one game terminal and game terminals positioned within a predetermined range set with reference to the position of the one game terminal based on the positional information, and extract game results of the game terminals included in the predetermined range as the part of the game results.

The predetermined range may be set in various ways. For example, in the aspect in which the extracting device uses the predetermined range, the center server may comprise a server storage unit that stores area division data that defines a plurality of predetermined units divided from a predetermined area, and the extracting device may specify the position of each game terminal in association with the predetermined unit defined by the area division data and set the predetermined range using the predetermined unit.

Further, in an aspect in which the game results of the game terminals within the predetermined range set using the positional information are extracted as a part of the game results, each of the plurality of game terminals may further comprise a condition designating device adapted and configured to designate a reference condition to be obtained as the reference information, and the extracting device may set the predetermined range based on the reference condition such that the reference condition is satisfied. In this case, since the predetermined range is set according to the designated reference condition, the reference condition as well as the positional information can be reflected in the reference information. For this reason, for example, when the number of target game terminals is designated as the reference condition, the predetermined range is set such that the number of designated game terminals is a target of the reference information, and the reference information confined to within the predetermined range is provided. Thus, when ranking information is provided as an example of the reference information, it is possible to effectively resolve geographical problems such as a problem that it is difficult to achieve high ranking in Tokyo which is high in population density and large in the high-score population.

Further, in the aspect in which the reference condition is used for setting of the predetermined range, the processing executing device may set a specific area which corresponds to the predetermined range and is based on the predetermined unit in which the at least one game terminal is present, execute the predetermined processing confined to game terminals included in the specific area before executing the predetermined processing on the predetermined range, and use the processing result when the predetermined processing is executed on the predetermined range. The predetermined range changes by designation of the reference condition, but an area considered to be necessarily included exists. In this case, since processing can be executed on this area in advance, a time necessary for the predetermined processing on the predetermined range can be reduced.

Various kinds of conditions may be employed as the reference condition. For example, in the aspect in which the condition designating device is provided, the number of the game terminals may be used as the reference condition, and the extracting device may set the predetermined range such that the number of the game terminals positioned within the predetermined range satisfies the number designated as the reference condition. In this case, a geographical problem can effectively be resolved.

Further, in the aspect in which the condition designating device is provided, a predetermined distance from the at least one game terminal may be used as the reference condition, and the extracting device may set the predetermined range such that the predetermined distance set as the reference condition corresponds to the predetermined range. In this case, the reference information confined to within the predetermined distance from one game terminal can be provided. Similarly, in the aspect in which the condition designating device is provided, the center server may comprise an area data storage unit that stores area definition data defining a plurality of predetermined areas, an area condition corresponding to the plurality of areas may be used as the reference condition, and the extracting device may set a predetermined area closest from the at least one game terminal among the plurality of predetermined areas as the predetermined range based on the area definition data when the area condition is designated as the reference condition. In this case, since reference information confined to within the predetermined area closest from one game terminal can be provided, for example, ranking information within the predetermined area such as a prefecture which is closest from a certain game terminal or includes the certain game terminal can be provided.

The predetermined unit used for a configuration of the predetermined range or the like may be set in various ways. For example, in the aspect in which the area division data is stored in the server storage unit, units into which the predetermined area are divided by the same area size such that the predetermined units have the same area size as one another may be used as the predetermined unit. In this case, since the predetermined unit hardly changes, it is possible to comparatively easily understand the predetermined range. Meanwhile, units into which the predetermined area is divided by the same distribution such that the number of game terminals included within each predetermined unit is a predetermined value or less may be used as the predetermined unit. In this case, the predetermined unit changes by movement of the game terminal, but, for example, when the number of game terminals is designated as the reference condition, processing for providing the reference information may be lessened. Thus, a time taken until provision of the reference information after request of the reference can be reduced depending on the reference condition.

A variety of information may be provided as the reference information. For example, in an aspect of the game system according to the present invention, the processing executing device may execute processing of ranking game results confined to game terminals within the predetermined range as the predetermined processing such that ranking information in which game results of the game terminals are ranked is provided as the reference information.

Further, various devices may be used as the game terminal. For example, in an aspect of the game system according to the present invention, a mobile phone with a GPS function may be used as the game terminal.

A control method according to the present invention is a control method which is applied for a game system which comprises: a center server; and a plurality of game terminals connectable to the center server via a communication line, wherein reference information is provided based on a processing result using game results of the game terminals and the control method comprises the steps: a step for controlling each of the plurality of game terminals to execute a positional information transmitting step that transmits own positional information to the center server in, and a step for controlling the center server to execute an extracting step that extracts a part of the game results of the plurality of game terminals based on the positional information transmitted by the positional information transmitting step, and a processing executing step that executes predetermined processing confined to a part of the game results extracted by the extracting step such that the reference information confined to the part of the game results is provided.

Further, a computer program according to the present invention is a computer program which is applied for a game system which comprises: a center server; and a plurality of game terminals connectable to the center server via a communication line, wherein reference information is provided based on a processing result using game results of the game terminals, wherein the computer program is configured so as to cause each of the plurality of game terminals to serve as a positional information transmitting device adapted and configured to transmit own positional information to the center server, and cause the center server to serve as an extracting device adapted and configured to extract a part of the game results of the plurality of game terminals based on the positional information transmitted by the positional information transmitting device, and a processing executing device adapted and configured to execute predetermined processing confined to a part of the game results extracted by the extracting device such that the reference information confined to the part of the game results is provided. By executing the control method or the computer program of the present invention, it is possible to realize the game system of the present invention.

### Advantageous Effects of Invention

As described above, according to the present invention, a part of all game results are extracted using the place in which each game terminal is actually positioned, and a processing result confined to the extraction range is provided. Thus, since the actual position of the game result can be reflected in the reference information, content of the reference information can be changed using the position of the game terminal.

### Brief Description of Drawings

Fig. 1 is a diagram illustrating an overall configuration of a game system according to an embodiment of the present invention.
Fig. 2 is a functional block diagram of a game terminal and a center server.
Fig. 3 is an explanatory diagram for describing a predetermined unit obtained by geographically dividing Japan.
Fig. 4 is an enlarged view illustrating a part of the Kanto area in Fig. 3.
Fig. 5 is a diagram illustrating an example of content of area division data.
Fig. 6 is a diagram illustrating an example of content of game result data.
Fig. 7 is a diagram illustrating an example of content of positional ranking data.
Fig. 8 is a diagram illustrating an example of a flowchart of an area division data updating process routine.
Fig. 9 is a diagram illustrating an example of a flowchart of a positional ranking generating process routine.
Fig. 10 is a diagram illustrating an example of a flowchart of a predetermined range deciding process routine.

### Description of Embodiments

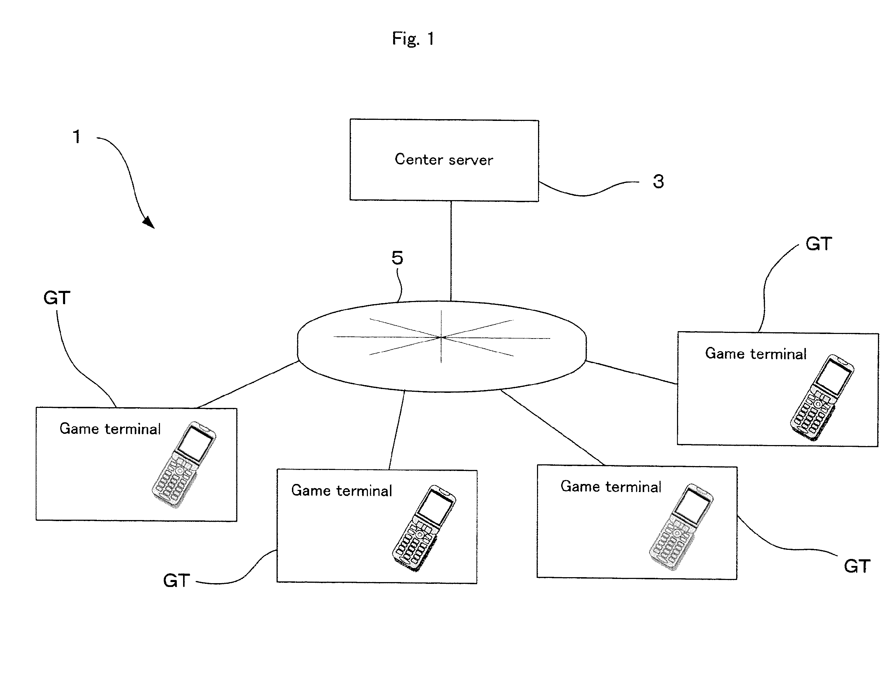

Hereinafter, a game system according to an embodiment of the present invention will be described. Fig. 1 is a diagram illustrating an overall configuration of a game system according to the embodiment of the present invention. In a game system 1, a plurality of game terminals GT are connected with a center server 3 via a network 5 as illustrated in Fig. 1. The center server 3 is not limited to an example of a single physical device, and a logical center server 3 may be configured with a group of servers serving as a plurality of physical devices. Furthermore, the game terminal GT may have a function of the center server 3.

In the present embodiment, a mobile phone is used as each game terminal GT. A receiver for a global positioning system (hereinafter, referred to as a "GPS") is mounted in the mobile phone, and a so-called GPS function is provided. Thus, each game terminal GT is configured so as to be able to acquire its positional information using a satellite.

The Internet or a mobile telephone network is used as the network 5. Incidentally, a communication line may be used as the network 5, and the network 5 is not limited to the Internet or the mobile telephone network.

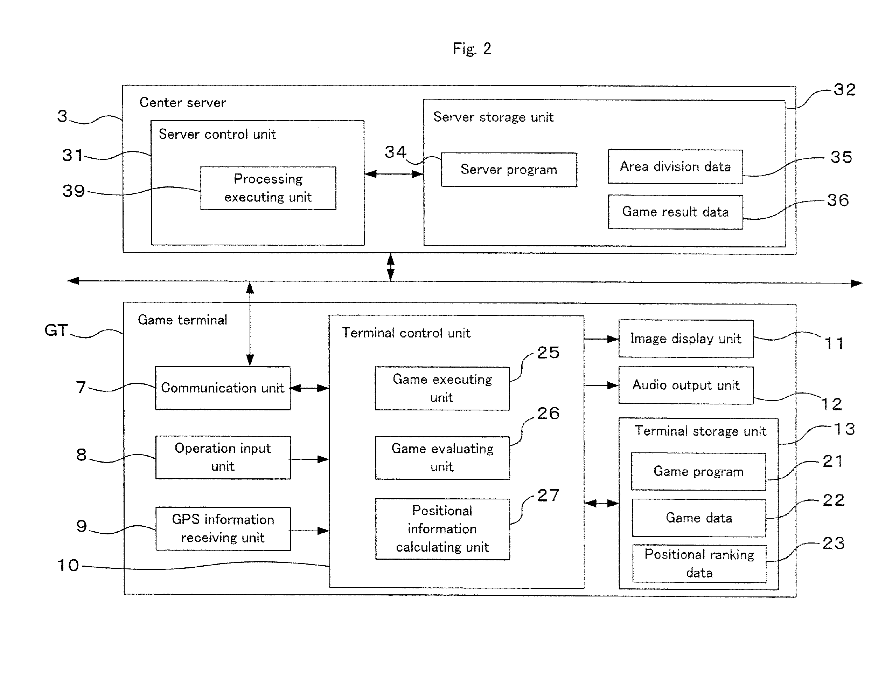

Fig. 2 is a functional block diagram of the game terminal GT and the center server 3. As illustrated in Fig. 2, the game terminal GT includes a communication unit 7, an operation input unit 8, a GPS information receiving unit 9, a terminal control unit 10, an image display unit 11, an audio output unit 12, and a terminal storage unit 13.

The communication unit 7 executes communication with the center server 3 via a network. The operation input unit 8 receives an operation input by the player. For example, the operation input unit 8 includes a keyboard, a touch panel, and the like. The GPS information receiving unit 9 receives a signal output from a GPS satellite, and functions as a GPS receiver. The image display unit 11 displays a game screen. For example, the image display unit 11 includes a monitor. The audio output unit 12 outputs a sound according to a game status or the like. For example, the audio output unit 12 includes a speaker or the like. The communication unit 7, the operation input unit 8, the GPS information receiving unit 9, the image display unit 11, and the audio output unit 12 are all connected to the terminal control unit 10.

The terminal control unit 10 is configured with a central processing unit (CPU) and a memory area necessary for an operation thereof, and functions as a computer. The terminal control unit 10 controls the communication unit 7 such that various kinds of pieces of information are transmitted to the center server 3 with reference to signals output from the operation input unit 8 and the GPS information receiving unit 9. The terminal control unit 10 causes a game screen to be displayed on the image display unit 11 according to the progress of a game, by outputting a video signal to the image display unit 11. Furthermore, the terminal control unit 10 causes a predetermined sound (including a back ground music (BGM) of a game) to be replayed through the audio output unit 12, by outputting an audio replay signal to the audio output unit 12. The terminal storage unit 13 is also connected to the terminal control unit 10.

The terminal storage unit 13 is configured with, for example, a hard disk or a flash solid state drive (SSD) so as to hold memory even when power is not supplied. The terminal storage unit 13 stores a game program 21, game data 22, and positional ranking data 23. The game program 21 is a computer program necessary to execute a game. Meanwhile, the game data 22 is configured with various kinds of data which is referred to when a game is executed according to the game program 21. For example, the game data 22 includes image data and BGM data.

The positional ranking data 23 refers to data related to ranking in which game results of the game terminals GT included within a predetermined range from its position are confined and ranked within the predetermined range. The positional ranking data 23 is transmitted from the center server 3 and stored in the terminal storage unit 13. The details of the positional ranking data 23 will be described later. Incidentally, the terminal storage unit 13 stores various kinds of programs and various kinds of data in addition to the game program 21, the game data 22, and the positional ranking data 23, but an illustration thereof is not provided.

As the game program 21 is executed, a game executing unit 25, a game evaluating unit 26, and a positional information calculating unit 27 are generated in the terminal control unit 10. Each of the game executing unit 25, the game evaluating unit 26, and the positional information calculating unit 27 is a logical device actualized by a combination of computer hardware and a computer program. The game executing unit 25 executes processing necessary to execute a game and causing a game to progress, and processing for providing ranking information confined within a predetermined range based on the positional ranking data 23. The game evaluating unit 26 executes processing for evaluating the player's operation during a game as a score or the like. The positional information calculating unit 27 executes processing for calculating its positional information based on the signal received from the satellite by the GPS information receiving unit 9. The above processing may be actualized by a known technique.

Meanwhile, the center server 3 includes a server control unit 31 and a server storage unit 32 connected to the server control unit 31. The server control unit 31 is configured with a CPU and a memory area necessary for an operation thereof, and functions as a computer. The server storage unit 32 is configured with, for example, a hard disk or a flash SSD (Solid State Drive) so as to hold memory even when power is not supplied.

The server storage unit 32 stores a server program 34 executed by the server control unit 31 and various kinds of pieces of data which are referred to by the program 34. Examples of various kinds of data stored in the server storage unit 32 include area division data 35 and game result data 36. The area division data 35 refers to data in which Japan as a predetermined area is geographically divided in a plurality of predetermined units and defined. The game result data 36 refers to data of game results of the game terminals GT acquired via the network 5. The game result includes an evaluation by which the player' s operation during a game is scored. The details of the data 35 and 36 will be described below. Incidentally, the server storage unit 32 may store ranking data which can be provided to each the game terminal GT via the network 5 in addition to the pieces of data described above. Examples of the ranking include prefectural ranking confined in a prefecture and national ranking.

As the server program 34 is executed, a processing executing unit 39 is generated in the server control unit 31. The processing executing unit 39 is a logical device actualized by a combination of computer hardware and a computer program. The processing executing unit 39 manages the area division data 35 and the game result data 36 stored in the server storage unit 32, and executes a positional ranking generating process of generating the positional ranking data 23 which is to be transmitted to each game terminal GT. The details of the positional ranking generating process will be described later.

Next, an example of a game executed by each game terminal GT will be described. In each game terminal GT, for example, a mahjong game in which a predetermined number of tiles are used, and a competition for scores is performed by a scoring combination formed by the tiles. In the mahjong game, a score is displayed as the game result at predetermined time intervals. Incidentally, the mahjong game may be configured such that each past game result, that is, each past score is held using the terminal storage unit 13 or the like, and each past score in its game terminal GT is ranked and provided as ranking information.

The game result of the mahjong game is transmitted to the center server 3 via a network. The center server 3 generates reference information such as ranking of each previously set area, for example, national ranking, prefectural ranking based on the game results transmitted from the game terminals GT. The center server 3 generates positional ranking using positional information transmitted from each game terminal GT as the reference information.

The positional ranking refers to ranking confined to the game results of the game terminals GT included within a predetermined range from the position of each game terminal based on the positional information transmitted from each game terminal GT. In other words, the ranked game results are confined to those of the game terminals GT included within a predetermined range, and ranking notified by positional ranking is ranking confined to within the predetermined range. When the positional ranking is referred to, the player designates the number of ranking targets as a reference condition. Further, the predetermined range is decided by the number of game terminals GT desired as the ranking target by the player such as ranking out of 100 people or ranking out of 50 people. Specifically, the predetermined range is decided as follows.

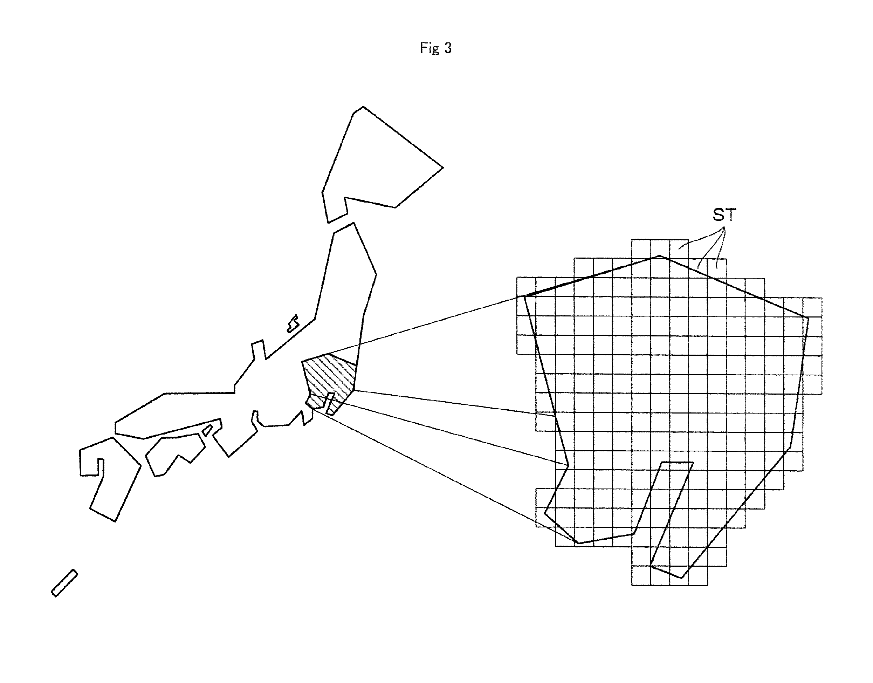

First, the predetermined range is specified by a combination of predetermined units. The predetermined unit is obtained by geographically dividing Japan. Fig. 3 is an explanatory diagram for describing the predetermined unit obtained by geographically dividing Japan. The example of Fig. 3 illustrates an enlarged Kanto area when Japan is geographically divided such that the predetermined units have the same area size. As illustrated in Fig. 3, a predetermined unit ST is represented by a square, and when Japan is geographically divided into predetermined units having the same area size, for example, the Kanto area can be specified by a predetermined number of predetermined units ST having the same area size.

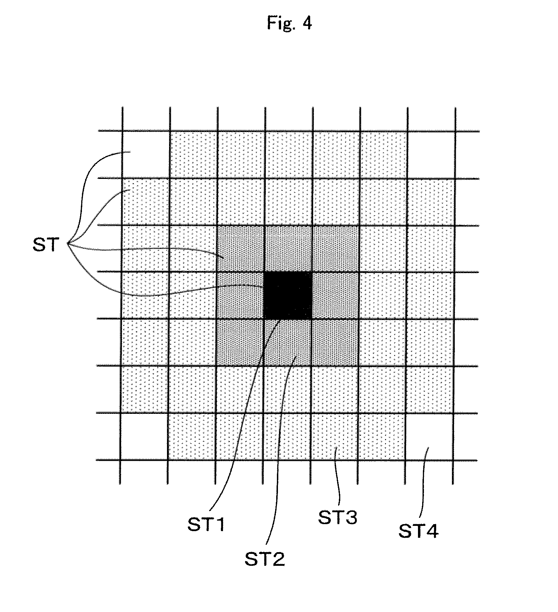

Fig. 4 is an enlarged view illustrating a part of the Kanto area in Fig. 3. As illustrated in Fig. 4, the predetermined units ST are classified into at least four areas. Firstly, a predetermined unit ST corresponding to the positional information of any one of the game terminals GT, that is, a predetermined unit ST corresponding to an area in which any one game terminal GT is present is classified into a presence area ST1. Secondly, each predetermined unit ST present around the presence area ST1 is classified into a first peripheral area ST2. Thirdly, each predetermined unit ST present around the first peripheral area ST2 is classified into a second peripheral area ST3. Fourthly, each predetermined unit ST that does not belong to any of the three areas ST1, ST2, and ST3 is classified into a common area ST4.

In the example of Fig. 4, the predetermined unit ST corresponding to the presence area ST1 is represented by black. In this example, the first peripheral area ST2 is configured with 8 predetermined units ST positioned to surround the presence area ST1, and represented by paler color than the presence area ST1. Similarly, the second peripheral area ST3 is configured with 36 predetermined units ST positioned so as to surround the first peripheral area ST2, and represented by paler color than the first peripheral area ST2. Furthermore, in this example, a part of the common areas ST4 positioned so as to surround the second peripheral area ST3 are represented by white. In other words, the first peripheral area ST2 and the second peripheral area ST3 are arranged in order from the presence area ST1 at the center such that the first peripheral area ST2 and the second peripheral area ST3 are included within a range of a predetermined distance from the presence area ST1, and the predetermined units ST outside the second peripheral area ST3 are classified into the common area ST4.

Meanwhile, the predetermined range is set using the number of game terminals GT of each predetermined unit ST. The number of game terminals GT of each predetermined unit ST is specified based on the positional information transmitted from each game terminal GT. In principle, the predetermined range is set so as to include the presence area ST1 serving as a specific area and the first peripheral area ST2. However, when the number of game terminals GT desired as a positional ranking target by the player is not reached even by the presence area ST1 and the first peripheral area ST2, each predetermined unit ST included in the second peripheral area ST3 is sequentially added to the predetermined range until a desired number of game terminals GT is reached. The addition order is preferably designated in advance, for example, such that the predetermined unit ST is added to be added in the left-handed direction (clockwise) starting from the predetermined unit ST positioned below the predetermined unit ST at the lower left corner of the first peripheral area ST2. And, the predetermined units ST of the second peripheral area ST3 added until the desired number of game terminals GT is reached (or may be slightly exceeded), the presence area ST1, and the first peripheral area ST2 are set as the predetermined range. The predetermined range is set as described above.

For example, positional ranking of a certain game terminal GT is generated as ranking confined to within the predetermined range in which the position where the certain game terminal GT is present is used as the presence area ST1. In other words, in positional ranking, ranking is made confined to game results of the game terminals GT included within the predetermined range, and game results of the game terminals GT not present within the predetermined range, that is, game results of the game terminals GT which are present within the common area ST4 and within the predetermined unit ST of the second peripheral area ST3 not included in the predetermined range are not reflected in ranking.

Further, a change in the position of the certain game terminal GT is reflected in the positional ranking. In other words, when the predetermined unit ST in which the certain game terminal GT is present changes, the predetermined unit ST of the change destination functions as the presence area ST1, and a new predetermined range centering on the presence area ST1 is reflected in the positional ranking. For this reason, when the presence position of the certain game terminal GT changes, even though the game result does not change, content of the positional ranking changes. This is similarly applied even when the position of the certain game terminal GT does not change but the position of each game terminal GT included within the predetermined range changes. As described above, the geographical position at which each game terminal GT is actually present is reflected in the positional ranking, and the positional ranking dynamically changes according to the change in the position of each game terminal GT.

In each game terminal GT, a game in which a game result can be ranked as described above is executed. Further, each game result of the game terminal GT is used for generation of various kinds of ranking as described above, and information of each generated ranking is provided to each game terminal GT as the reference information. And, the player's motivation can be improved by the provided ranking information.

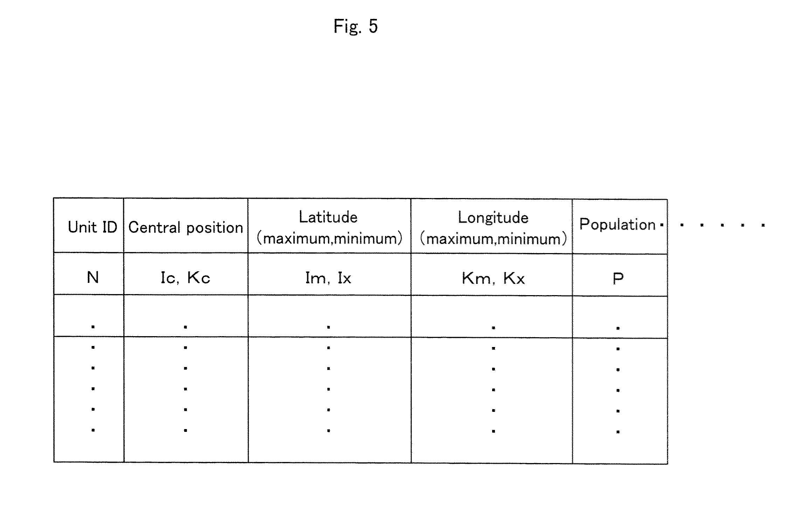

Next, the details of the data 35 and 36 stored in the server storage unit 32 and the positional ranking data 23 stored in the terminal storage unit 13 will be described with reference to Figs. 5 to 8. Fig. 5 is a diagram illustrating an example of content of the area division data 35. As illustrated in Fig. 5, the area division data 35 includes a set of records in which information of a latitude and a longitude of the central position, the position of the predetermined unit ST such as information of maximum and minimum latitudes and maximum and minimum longitudes included in the predetermined unit ST, and information representing a range are recorded in association with a unique unit ID for each predetermined unit ST. In the example of Fig. 5, information N of the unit ID, information Ic of the latitude and information Kc of the longitude of the central position, information Im of the minimum value and information Ix of the maximum value of the latitude included in the predetermined unit ST, and information Km of the minimum value and information Kx of the maximum value of the longitude are arranged in order from the left side and stored.

Furthermore, in the area division data 35, information P of the population included within the predetermined unit ST is stored in association with the unit ID. This information is information representing the number of game terminals GT included within the predetermined unit ST. For example, the population information P is configured so as to be updated at regular intervals, for example, hourly, daily, or weekly so that movement of each game terminal GT, that is, a change of each game terminal GT is reflected. Incidentally, the area division data 35 may additionally include various kinds of information defining the predetermined unit ST.

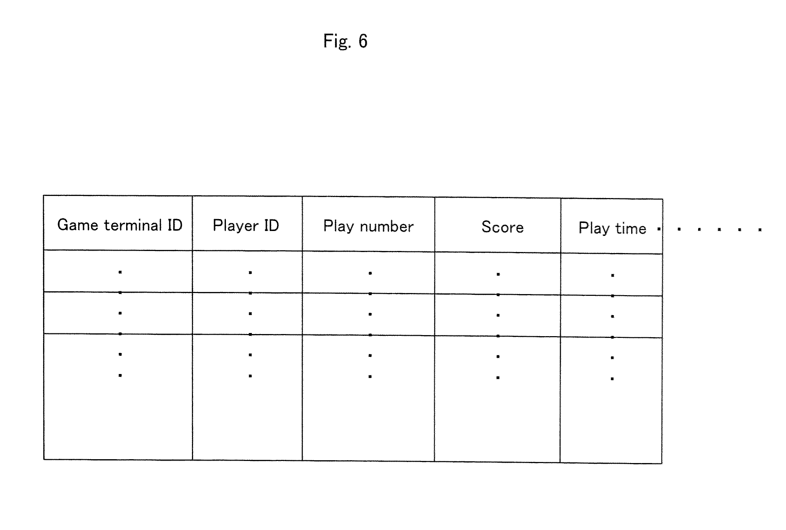

Fig. 6 is a diagram illustrating an example of content of the game result data 36. As illustrated in Fig. 6, the game result data 36 includes a set of records in which each score serving as a game result is recorded in association with the unique game terminal ID for each game terminal GT. In the example of Fig. 6, in the game result data 36, a score is associated with a unique player ID for each player who plays a game of each game terminal GT. Thus, the game result data 36 is configured so that the game results can be sorted according to a score of each player of each game terminal GT as well as a score of each game terminal ID.

Incidentally, the game result data 36 may include any other information. In the example of Fig. 6, play number information and play time information are included as an example. The play number information is information representing the number of times that the player has played a game to obtain a game result for each player ID. The play time information is information representing a period of time in which the player has played a game for each player ID. The information may also be used as an example of information of the game result.

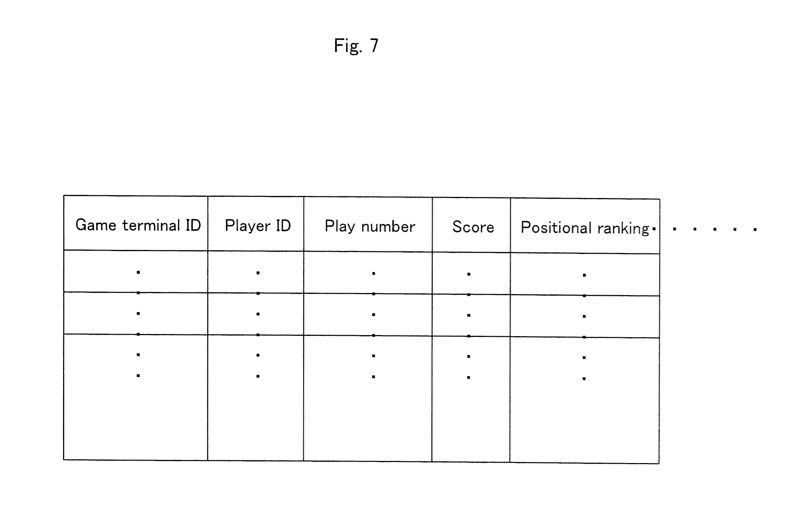

Fig. 7 is a diagram illustrating an example of content of the positional ranking data 23. As illustrated in Fig. 7, the positional ranking data 23 includes a set of records in which the game terminal ID (or the player ID), a game result such as a score corresponding to the ID, and positional ranking made within a range confined to the game terminals ID included in the positional ranking data 23 are recorded in association with one another. The game terminal ID and the game result corresponding to the ID are in common with the game terminal ID and the game result corresponding to the ID in the game result data 36. The positional ranking data 23 is ranking data generated in a confined range which is of the predetermined range. Thus, the positional ranking represents ranking of each game terminal ID (or each player ID) when ranking is made confined to the game terminals GT included within the predetermined range.

Next, an outline of processing executed by the processing executing unit 39 at the center server 3 side will be described. The processing executing unit 39 executes processing for managing the data 35 and 36 such as deletion, sorting, and updating of each record of the area division data 35 and the game result data 36 at an appropriate timing. Further, the processing executing unit 39 appropriately executes generation of the reference information based on the game result such as national ranking or regional ranking. A detailed description of processing which can be realized by well-known processing among pieces of processing executed by the processing executing unit 39 will not be made.

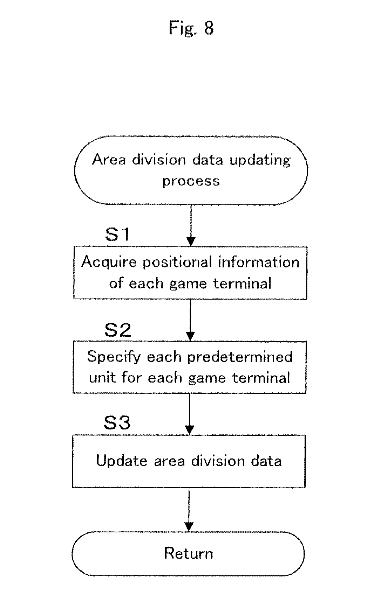

The processing executing unit 39 executes processing of updating the population information of the area division data 35. Fig. 8 is a diagram illustrating an example of a flowchart of an area division data updating process routine executed by the processing executing unit 39. For example, the routine of Fig. 8 is executed at an appropriate timing at regular intervals such as hourly or daily. Incidentally, as the execution frequency increases, the more recent position is reflected in the area division data 35. The area division data 35 is used for generation of the positional ranking data 23 which will be described later. Further, the more recent the generation timing of the positional ranking data 23 is, the more the position of the game terminal GT is reflected in positional ranking in real time. Thus, the routine of Fig. 8 may be executed based on a positional ranking reference (or generation) instruction from each game terminal GT. However, when the routine of Fig. 8 is executed at regular intervals, a time necessary until generation of positional ranking is reduced.

Fig. 8 is a diagram illustrating an example of a flowchart of the area division data updating process routine executed by the processing executing unit 39. When the routine of Fig. 8 starts, in step S1, the processing executing unit 39 first acquires positional information of each game terminal GT. Next, in step S2, each predetermined unit ST belonging to each game terminal GT is specified for each game terminal GT using the positional information of each game terminal GT acquired in step S1 and information defining the position and the range of each predetermined unit ST such as the information Ic and Kc of the central position in the area division data 35 and the information Im, Ix, Km, and Kx representing the range of the predetermined unit ST. For example, the specifying is actualized by specifying each unit ID to which the positional information of each game terminal GT belongs based on the information of each the predetermined unit ST defined by the area division data 35.

Next, in step S3, the processing executing unit 39 updates the area division data 35 using the result of step S2 such that the population information becomes information of the number of game terminals included in each predetermined unit ST specified in step S2 for each unit ID. When the process of step S3 ends, the processing executing unit 39 ends the current routine. As a result, the latest positional information of each game terminal GT is reflected in the population information of the area division data 35.

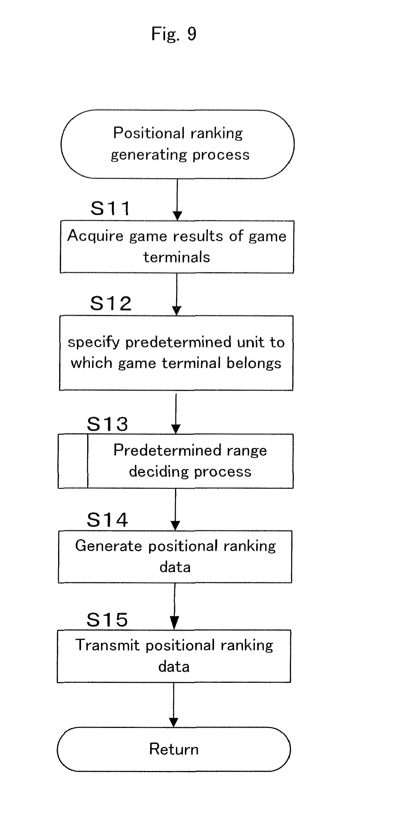

Meanwhile, the processing executing unit 39 executes processing for generating positional ranking. Fig. 9 is a diagram illustrating an example of a flowchart of a positional ranking generating process routine executed by the processing executing unit 39. For example, the routine of Fig. 9 starts based on an instruction of a positional ranking generating process from each game terminal GT. For example, an instruction output from each game terminal GT or the like based on an operation input through the operation input unit 8 such as a positional ranking reference button or selection of a command may be used as this instruction. Incidentally, the routine of Fig. 9 may be executed at regular intervals such as hourly using the number of ranking targets which are high in desired frequency in advance.

When the routine of Fig. 9 starts, in step S11, the processing executing unit 39 acquires the game results of the game terminals GT. For example, this acquisition is actualized by acquiring the game results of the game terminals GT through the game result data 36 in which the latest game results of the game terminals GT previously are updated and reflected by separate processing.

Next, in step S12, the processing executing unit 39 specifies the predetermined unit ST to which the game terminal GT of the target to which the positional ranking reference instruction is output belongs among the predetermined units ST using the area division data 35. This specifying is actualized by specifying the predetermined unit ST in which the positional information of the game terminal GT of the target is included based on information of each predetermined unit ST defined by the area division data 35.

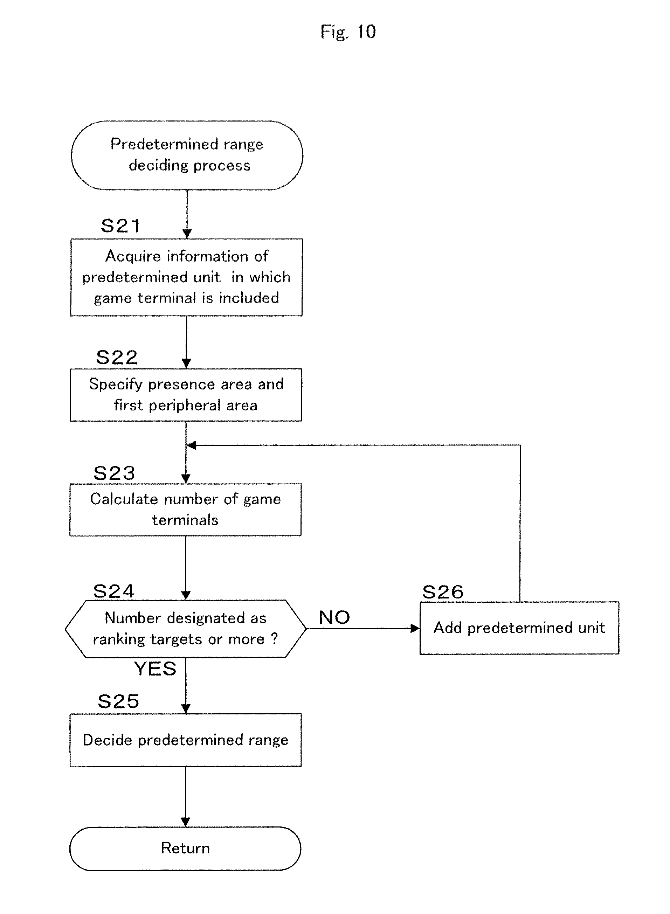

Next, in step S13, the processing executing unit 39 executes a predetermined range deciding process routine. Fig. 10 is a diagram illustrating an example of a flowchart of the predetermined range deciding process routine executed by the processing executing unit 39. When the routine of Fig. 10 starts, in step S21, the processing executing unit 39 acquires information of the predetermined unit ST in which the game terminal GT of the target specified in step S12 in the routine of Fig. 9 is included. Next, in step S22, the processing executing unit 39 specifies the presence area ST1 and the first peripheral area ST2 based on the predetermined unit ST acquired in step S21. Specifically, the processing executing unit 39 specifies the presence area ST1 and the first peripheral area ST2 previously set to the presence area ST1 by specifying the predetermined unit ST acquired in step S21 as the presence area ST1.

Next, in step S23, the processing executing unit 39 calculates the presence area ST1 specified in step S22 and the number of game terminals GT included in the first peripheral area ST2 with reference to the area division data 35. Next, in step S24, the processing executing unit 39 determines whether or not the number of game terminals GT calculated in step S23 is the number designated as ranking targets or more. When the determination result is positive, that is, when the number of game terminals GT calculated in step S22 is the number of ranking targets or more, the processing executing unit 39 proceeds to step S25. In step S25, the processing executing unit 39 decides the presence area ST1 and the first peripheral area ST2 as the predetermined range, and then ends the current routine.

In contrast, when the determination result of step S24 is negative, that is, when the number of game terminals GT included in the presence area ST1 and the first peripheral area ST2 specified in step S22 is less than the number of ranking targets, the processing executing unit 39 proceeds to step S26. In step S26, the processing executing unit 39 sets a range in which one predetermined unit ST in the second peripheral area ST3 corresponding to the presence area ST1 specified in step S22 is added to the presence area ST1 and the first peripheral area ST2 as the predetermined range. Next, the processing executing unit 39 returns to step S23, and in step S23, the processing executing unit 39 calculates the number of game terminals GT within the predetermined range set in step S26. Furthermore, the processing executing unit 39 proceeds to step S24, and in step S24, the processing executing unit 39 determines whether or not the number of game terminals GT included within the predetermined range set in step S26 is the number of ranking targets or more using the calculation result of step S23. When the determination result is negative, the processing executing unit 39 proceeds to step S26 again, and in step S26, the processing executing unit 39 further adds the predetermined unit ST different from the previous time to the predetermined range set in step S26 in the previous time. The order of the predetermined unit ST in the second peripheral area ST3 to be added to the predetermined range each time the process of step S26 is executed is a previously set order. Then, the processing executing unit 39 executes repeatedly the above process until the determination result of step S24 becomes positive, and increases the number of the predetermined units ST included in the predetermined range one by one. Meanwhile, when the determination result of step S24 is positive, the process proceeds to step S25, in step S26, the processing executing unit 39 decides the finally set range as the predetermined range, and then ends the current routine.

Referring back to Fig. 9, subsequently to step S13, in step S14, the processing executing unit 39 generates the positional ranking data 23. For example, this generation is executed as follows. First, the processing executing unit 39 extracts the game results confined to the game terminals GT included in the predetermined range decided in step S13 from the game result data 36 for each record, and generates extraction data configured with the extracted records. Next, the processing executing unit 39 compares the game results of the game terminals GT in the generated extraction data with one another, and decides ranking of the game results in the extraction data. Then, data in which the ranking result is added to the extraction data as the positional ranking is generated as the positional ranking data 23. Incidentally, according to the addition of the positional ranking information, the processing executing unit 39 may delete unnecessary information in the extraction data so that only necessary information is included in the positional ranking data 23. As described above, in step S14, the processing executing unit 39 generates the positional ranking data 23.

Next, in step S15, the processing executing unit 39 transmits the positional ranking data 23 generated in step S14 to the game terminal GT of the target, and ends the current routine. Thus, the actual position of each game terminal GT is reflected, and ranking confined to the game terminals GT included within the predetermined range based on the actual position is generated. Incidentally, the transmitted positional ranking data 23 may constantly be overwritten, and only one positional ranking data 23 may be stored in the game terminal GT. Meanwhile, a plurality of pieces of positional ranking data 23 may be stored in the terminal storage unit 13 using an ID with information such as a transmission date and time or the number of target game terminals, and the positional ranking data 23 may be managed by the terminal control unit 10.

As described above, according to this embodiment, in addition to national ranking or regional ranking, ranking within the predetermined range based on the place in which the game terminal GT is actually positioned is generated as positional ranking. Since the predetermined range of positional ranking changes according to the position of each game terminal GT, information of the positional in which the game terminal GT is actually present can be reflected in the positional ranking. In other words, a range in which ranking information is provided using the position of the game terminal GT can be changed. Furthermore, the predetermined range changes by a desired number of ranking targets. In prefectural ranking of the related art, a geographical range is first designated, and ranking is decided within the geographical range. Thus, there is an imbalance in ranking due to a population density or the like. In contrast, in the positional ranking, the predetermined range is set so that a desired number of game terminals GT become targets based on its own position. In other words, ranking can be decided based on a desired number of targets present within a range close to its own position. Thus, even in the area having high population density, ranking can be confined and decided in relation to a desired number of targets. Thus, geographical problem caused by population density or the like can be resolved.

In the above embodiment, a combination of the GPS information receiving unit, the terminal control unit 10, and the communication unit 7 functions as a positional information transmitting device. A combination of the operation input unit and the terminal control unit 10 functions as a condition designating device. Furthermore, the server control unit 31 functions as an extracting device and a processing executing device by executing the routine of Fig. 9 and the routine of Fig. 10 through the processing executing unit 39.

The present invention is not limited to the above embodiment, and can be embodied in an appropriate embodiment. In the above embodiment, units having the same area size are used as the predetermined unit ST, and Japan is geographically divided into units having the same area size, but the predetermined unit is not limited to the above embodiment. For example, there may be used the predetermined unit that is set based on the population such that equal population distribution is made, for example, each unit has the same population or the population of n or less. For example, the equal distribution unit, whose population is n or less, serving as the predetermined unit is actualized such that an overall geographical area (Japan) is geographically divided into two areas which are the same in the population as each other, then each of the equally divided two areas is further geographically divided into two areas which are the same in the population, and the dividing equally is repeated until the population is n or less. Furthermore, the population of the equal distribution needs not be based on all game terminals. For example, there may be used the predetermined unit having the equal distribution based on only the game terminals having the game result that satisfies a predetermined condition such as a play time or a play level among all game terminals. The process for generating the area division data using the equal distribution unit may be execute at regular intervals such as daily or weekly in terms of a necessary processing time. Furthermore, the predetermined area is not limited to Japan, a specific area such as Kanto or each of countries all over the world may be used as the predetermined area.

Further, the processing executing unit 39 may be configured so as to execute processing for reducing a processing time taken for generating the positional ranking data 23. As this processing, for example, the processing executing unit 39 may execute processing for generating ranking confined to the game terminals GT within a specific area (for example, the presence area ST1 and the first peripheral area ST2 in the above embodiment) necessarily included in the predetermined range in advance (before the routine of Fig. 9), separately from the routine of Fig. 9. In this case, the game results of the game terminals outside the range generated in advance may be required to be compared with only the highest ranking and the lowest ranking which are generated in advance, and thus the processing time may be reduced. Similarly, in order to reduce the processing time, the processing executing unit 39 may generate ranking of each predetermined unit in advance.

In the above embodiment, the mahjong game has been described as an example, but the game executed by the game terminal is not limited to the embodiment like this. Any game may be executed by the game terminal as long as the game includes at least one element which can be numerically converted during a game such as a music game, an action game, or a role-playing game. In other words, in the above embodiment, information of a score obtained by a game is used as a game result, but information used as a game result is not limited to this information. For example, various kinds of elements which can be numerically converted during a game such as the play time may be used as the game result. Furthermore, in the above embodiment, the ranking information is provided as the reference information, but the reference information is not limited to this information. For example, a variety of information, which can attract the player's interest, such as an average of scores confined to the game terminals within the predetermined range or a most frequently appearing score may be provided as the reference information according to content of a game.

In the above embodiment, the number of ranking targets is used as the reference condition, but the reference condition is not limited to this embodiment. For example, various kinds of conditions such as the play time, the play level or an acquisition item depending on a game may be used. Further, for example, a predetermined distance from a certain game terminal may be used as the reference condition, and a predetermined range corresponding to the predetermined distance may be set. In this case, for example, the predetermined range is set by the predetermined unit included within the predetermined distance. Alternatively, a predetermined area such as a prefecture may be used as the reference condition. In this case, an area condition in which information related to the predetermined area is required may be designated as the reference condition. And, based on this designation, a predetermined area (including a case in which the position of the game terminal is included) closest to the position of the certain game terminal may be set as the predetermined range. Further, in order to specify the predetermined area, area definition data defining the predetermined area may be stored in the server storage unit 32. For example, the area definition data is actualized by defining the predetermined unit configuring the predetermined area using the area definition data. Incidentally, in this case, the server storage unit 32 functions as an area data storage unit.

The positional information transmitting device is not limited to the embodiment using the above-described GPS function. For example, transmission of positional information may be actualized by transmitting information input by the player via a network.

In the above embodiment, the mobile phone is used as the game terminal, but the game terminal is not limited to this embodiment. For example, various kinds of game machines such as game machines for business use, game machines for home use, stationary game machines, and portable game machines, personal computers, or the like may be used as the game terminal.

## Claims

1. A game system which comprises: a center server; and a plurality of game terminals connectable to the center server via a communication line, wherein reference information is provided based on a processing result using game results of the game terminals,
each of the plurality of game terminals comprises a positional information transmitting device adapted and configured to transmit own positional information to the center server, and
the center server comprises: an extracting device adapted and configured to extract a part of the game results of the plurality of game terminals based on the positional information transmitted by the positional information transmitting device; and a processing executing device adapted and configured to execute predetermined processing confined to a part of the game results extracted by the extracting device such that the reference information confined to the part of the game results is provided.

2. The game system according to claim 1, wherein the extracting device specifies a position of at least one game terminal and game terminals positioned within a predetermined range set with reference to the position of the one game terminal based on the positional information, and extracts game results of the game terminals included in the predetermined range as the part of the game results.

3. The game system according to claim 2, wherein
the center server comprises a server storage unit that stores area division data that defines a plurality of predetermined units divided from a predetermined area, and
the extracting device specifies the position of each game terminal in association with the predetermined unit defined by the area division data and set the predetermined range using the predetermined unit.

4. The game system according to claim 2 or 3, wherein
each of the plurality of game terminals further comprises a condition designating device adapted and configured to designate a reference condition to be obtained as the reference information, and
the extracting device sets the predetermined range based on the reference condition such that the reference condition is satisfied.

5. The game system according to claim 4, wherein the processing executing device sets a specific area which corresponds to the predetermined range and is based on the predetermined unit in which the at least one game terminal is present, executes the predetermined processing confined to game terminals included in the specific area before executing the predetermined processing on the predetermined range, and uses the processing result when the predetermined processing is executed on the predetermined range.

6. The game system according to claim 4 or 5, wherein
the number of the game terminals is used as the reference condition, and
the extracting device sets the predetermined range such that the number of the game terminals positioned within the predetermined range satisfies the number designated as the reference condition.

7. The game system according to claim 4 or 5, wherein
a predetermined distance from the at least one game terminal is used as the reference condition, and
the extracting device sets the predetermined range such that the predetermined distance set as the reference condition corresponds to the predetermined range.

8. The game system according to claim 4 or 5, wherein
the center server comprises an area data storage unit that stores area definition data defining a plurality of predetermined areas,
an area condition corresponding to the plurality of areas is used as the reference condition, and
the extracting device sets a predetermined area closest from the at least one game terminal among the plurality of predetermined areas as the predetermined range based on the area definition data when the area condition is designated as the reference condition.

9. The game system according to any one of claims 3 to 8, wherein units into which the predetermined area are divided by the same area size such that the predetermined units have the same area size as one another is used as the predetermined unit.

10. The game system according to any one of claims 3 to 8, wherein units into which the predetermined area is divided by the same distribution such that the number of game terminals included within each predetermined unit is a predetermined value or less is used as the predetermined unit.

11. The game system according to any one of claims 1 to 10, wherein the processing executing device executes processing of ranking game results confined to game terminals within the predetermined range as the predetermined processing such that ranking information in which game results of the game terminals are ranked is provided as the reference information.

12. The game system according to any one of claims 1 to 11, wherein a mobile phone with a GPS function is used as the game terminal.

13. A control method which is applied for a game system which comprises: a center server; and a plurality of game terminals connectable to the center server via a communication line, wherein reference information is provided based on a processing result using game results of the game terminals and the control method comprises the steps:
a step for controlling each of the plurality of game terminals to execute a positional information transmitting step that transmits own positional information to the center server in, and
a step for controlling the center server to execute an extracting step that extracts a part of the game results of the plurality of game terminals based on the positional information transmitted by the positional information transmitting step, and a processing executing step that executes predetermined processing confined to a part of the game results extracted by the extracting step such that the reference information confined to the part of the game results is provided.

14. A computer program which is applied for a game system which comprises: a center server; and a plurality of game terminals connectable to the center server via a communication line, wherein reference information is provided based on a processing result using game results of the game terminals, wherein
the computer program is configured so as to cause each of the plurality of game terminals to serve as a positional information transmitting device adapted and configured to transmit own positional information to the center server, and cause the center server to serve as an extracting device adapted and configured to extract a part of the game results of the plurality of game terminals based on the positional information transmitted by the positional information transmitting device, and a processing executing device adapted and configured to execute predetermined processing confined to a part of the game results extracted by the extracting device such that the reference information confined to the part of the game results is provided.
